# EUROPÄISCHE PATENTSCHRIFT

(11) **EP 1 700 182 B1**
(45) Veröffentlichungstag und Bekanntmachung des Hinweises auf die Patenterteilung: **17.06.2009**
(21) Anmeldenummer: 04804422.6
(22) Anmeldetag: 30.12.2004
(51) Int. Cl.: G06F 21/00

(54) **VERFAHREN ZUM WIEDERHERSTELLEN EINES BERECHTIGUNGSCODES**
AUTHORIZATION CODE RECOVERING METHOD
PROCEDE POUR RECONSTITUER UN CODE D'AUTORISATION

(30) Priorität: 30.12.2003 EP 03029968
(43) Veröffentlichungstag der Anmeldung: 13.09.2006
(73) Patentinhaber: Wibu-Systems AG, 76137 Karlsruhe (DE)
(72) Erfinder: WINZENRIED, Oliver, 76137 Karlsruhe (DE); BUCHHEIT, Marcellus, 76133 Karlsruhe (DE)
(74) Vertreter: Petirsch, Markus
(86) Internationale Anmeldenummer: PCT/EP2004/014837
(87) Internationale Veröffentlichungsnummer: WO 2005/064432

(56) Entgegenhaltungen:
- EP-A- 1 158 410
- WO-A-01/18807
- WO-A-03/026207
- US-A1- 2003 028 786
- US-A1- 2003 074 569

## Beschreibung

Die vorliegende Erfindung betrifft ein Verfahren zum Wiederherstellen eines Berechtigungscodes, der einem Lizenznehmer von einem Lizenzgeber zugeteilt wurde, wobei der Berechtigungscode in einem zugriffsgeschützten Datenverarbeitungsgerät gespeichert ist, das über eine Schnittstelle an einen Computer des Lizenznehmers angeschlossen ist.

Anwendungsprogramme, Software und andere elektronische Dokumente werden oft vor unberechtigtem Zugriff geschützt. Zur Nutzung dieser elektronischen Daten und Programme benötigt der Anwender eine Lizenz vom Lizenzgeber. Der Lizenznehmer erhält vom Lizenzgeber einen Berechtigungscode, der ihm die Ausübung seiner Lizenz ermöglicht.

Im einfachsten Fall ist der Berechtigungscode eine alpha-numerische Ziffernfolge, die vom Lizenznehmer beim ersten Gebrauch des Programms oder bei jedem Öffnen eines Dokuments manuell eingegeben wird. Nachteilig bei diesem Verfahren ist jedoch, dass der Berechtigungscode vom Lizenznehmer an unberechtigte Dritte weitergegeben werden kann, so dass es zu einer unerwünschten Vervielfältigung des Berechtigungscodes und damit zum Missbrauch der Lizenz kommen kann.

Die EP 1 158 410 A1 beschreibt ein System und ein Verfahren, bei dem Dateninhalte und dazugehörige Inhalteschlüssel auf einem PC gespeichert werden, die von einem so genannten EMD-Server über ein Netzwerk verteilt werden. Im Falle des Verlusts oder des Löschens der Daten oder der Inhalteschlüssel wird von einer Managementeinheit eine Verbindung zu dem EMD-Server hergestellt, um eine Benutzerauthentifizierung durchzuführen. Dabei werden so genannte Log-Informationen aus der Benutzerkennung eines autorisierten Benutzers ermittelt, um daraus einen Prüfwert zu erzeugen. Der Prüfwert basiert auf einer Daten-ID der Dateninhalte, die in der Log-Information hinterlegt sind. Der Server übermittelt den erzeugten Prüfwert an die Managementeinheit. Existiert ein lokal auf dem PC gespeichertes Backup, so speichert die Managementeinheit die gesicherten Daten zurück auf die Festplatte des Computers. Ist das lokale Backup zerstört, so werden die Daten von dem EMD-Server übermittelt. Hierzu ist es jedoch zwangsläufig erforderlich, dass vorher die Kaufdaten der Dateninhalte geprüft werden, die in dem EMD-Server hinterlegt werden müssen.

Die US 2003 / 0074569 A1 beschreibt ein Verfahren und ein System zur Datenspeicherung. Verschlüsselte Daten werden frei über ein Netzwerk vertrieben. Ein Datenschlüssel zur Entschlüsselung der Daten wird gegen Gebühr an einen Teilnehmer abgegeben, der den Schlüssel in seinem Rechner speichern kann. Gleichzeitig wird ein rechnerspezifischer Code ermittelt, der mit dem Schlüssel abgespeichert wird. Damit wird sichergestellt, dass die verschlüsselten Daten nur von einem berechtigten Benutzer auf einem bestimmten Computer verwendet werden können und dass ein einmal erworbener Schlüssel nicht von anderen Benutzern oder auf anderen Computern angewendet werden kann. Die Schlüssel werden auf der Festplatte des Computers des Teilnehmers gespeichert. Zusätzlich wird ein Backup des Schlüssels auf einer externen Memory-Card vorgenommen. Es wird ein gerätespezifischer Code des Lizenznehmer-Computers erzeugt und gemeinsam mit dem Schlüssel auf dem Speichermedium gesichert. Bei Verlust des Schlüssels auf der Festplatte kann der Schlüssel von dem Speichermedium zurückgelesen werden. Hierzu ist es allerdings notwendig, den gerätespezifischen Code, der auf dem Speichermedium hinterlegt ist, mit dem gerätespezifischen Code des Lizenznehmer-Computers zu vergleichen. Es werden also zwangsläufig Informationen über den Lizenznehmer-Computer ausgetauscht.

Der Berechtigungscode kann alternativ direkt vom Lizenzgeber in einem Datenverarbeitungsgerät, einem so genannten Dongle, hinterlegt sein. Der Berechtigungscode lässt sich nicht aus dem Dongle entfernen; er kann also nicht dupliziert werden. Die Ausführung eines derart gesicherten Computerprogramms ist nur möglich, wenn der Dongle an eine Schnittstelle des Computers angeschlossen ist, auf dem das Anwendungsprogramm ausgeführt werden soll. Da der Dongle vom Lizenzgeber erstellt wird, ist für jedes Anwendungsprogramm ein eigener Dongle notwendig, der die Schnittstelle am Computer belegt. Bei Verlust oder Zerstörung des Dongle muss der Lizenzgeber kontaktiert werden, damit er einen neuen Dongle mit dem entsprechenden Berechtigungscode erzeugt und dem Lizenznehmer zusendet.

Bekannt sind auch elektronische Datenverarbeitungsgeräte, auf denen mehrere Berechtigungscodes für Anwendungsprogramme oder digitale Dokumente gespeichert sind. Diese Geräte werden ebenfalls an die Schnittstelle eines Computers angeschlossen. Ein Beispiel für ein solches Datenverarbeitungsgerät ist der Codemeter-Stick der Firma WIBU-SYSTEMS AG. Dies ist ein mobiler Lizenz-Stick, der zum Beispiel an die USB-Schnittstelle eines Computers angeschlossen wird. Prinzip und Arbeitsweise eines solchen Lizenzierungsgeräts sind in der EP 1 184 771 B1 beschrieben.

Ein Lizenznehmer erwirbt ein "leeres" Datenverarbeitungsgerät. Die Lizenzen oder "digitalen Rechte" können nur von den Urhebern bzw. den rechtmäßigen Lizenzgebern auf dem Datenverarbeitungsgerät gespeichert werden. Der Besitzer des Geräts kann die Lizenzen oder Berechtigungscodes eines Lizenzgebers unabhängig von ihm weder erstellen noch in dem Gerät speichern.

Auf dem Datenverarbeitungsgerät können "digitale Rechte" von mehreren unabhängigen Lizenzgebern für mehrere unterschiedliche und unabhängige Produkte gespeichert werden. Dies können neben Anwendungsprogrammen und Computersoftware auch Dokumente, Musikstücke oder Filme sein. Die Lizenzen können verschiedener Art sein, beispielsweise zeitlich unbegrenzt, zeitlich begrenzt oder nutzungsbegrenzt, so genannte Pay-per-Use-Lizenzen oder Ähnliches. Sobald der Stick am Computer eingesteckt ist, können die entsprechenden Programme die Berechtigungscodes der Lizenzen abfragen und die Benutzung bzw. den Zugang freigeben.

Je mehr Berechtigungscodes und digitale Rechte in dem Gerät gespeichert sind, desto größer ist der Wert des Geräts. Bei Verlust oder Beschädigung eines Geräts, auf dem viele Lizenzen bzw. Berechtigungscodes für Lizenzen gespeichert sind, ist das Wiederherstellen der Berechtigungscodes sehr mühsam. Für jede einzelne Lizenz müssen die entsprechenden Lizenzgeber kontaktiert werden; Nachweise über die Berechtigung und den Erwerb der Lizenzen müssen erbracht und an die Lizenzgeber übersandt werden. Dies ist eine aufwendige und langwierige Prozedur. Häufig ist es nicht möglich, alle Berechtigungscodes wiederzuerlangen. Bei nutzungsabhängigen Lizenzen, die sich mit der Häufigkeit der Nutzung verringern, wird der Lizenzgeber in der Regel nicht bereit sein, die Lizenz vollständig wiederherzustellen.

Aufgabe der vorliegenden Erfindung ist es somit, Berechtigungscodes, die in einem am Computer anzuschließenden Gerät sicher gespeichert sind, im Falle eines Verlusts oder Defekts des Geräts einfach und schnell wiederherzustellen.

Gelöst wird die vorliegende Aufgabe durch ein Verfahren gemäß den kennzeichnenden Merkmalen des Patentanspruchs 1. Bevorzugte Weiterbildungen des erfindungsgemäßen Verfahrens sind in den Unteransprüchen 2 bis 13 definiert.

Das erfindungsgemäße Verfahren zum Wiederherstellen eines Berechtigungscodes, der in einem zugriffsgeschützten Datenverarbeitungsgerät gespeichert ist, das über eine Schnittstelle an einen Lizenznehmer-Computer angeschlossen ist, greift auf eine Sicherungsdatei zu, die auf einem Lizenznehmer-Computer gespeichert ist. Der Berechtigungscode wurde von einem Lizenzgeber-Computer and den Lizenznehmer-Computer übermittelt, wobei der Berechtigungscode von einem Lizenzgeber einem Lizenznehmer zugeteilt wurde. Auf dem Datenverarbeitungsgerät sind wenigstens ein erster Berechtigungscode, der auf einem ersten Lizenzgeber-Computer erzeugt wurde, und ein zweiter Berechtigungscode, der auf einem zweiten Lizenzgeber-Computer erzeugt wurde, abgespeichert. Die Sicherungsdatei auf dem Lizenznehmer-Computer, die zu den auf dem Datenverarbeitungsgerät abgespeicherten Berechtigungscodes gehört, enthält zu den einzelnen Berechtigungscodes gehörende Lizenzparameter. Es werden also auf dem Datenverarbeitungsgerät mehrere Berechtigungscodes von mehreren Lizenzgebern abgespeichert. Dennoch ist nur eine Sicherungsdatei vorhanden, die Lizenzparameter zu den einzelnen Berechtigungscodes umfasst. Nach dem erfindungsgemäßen Verfahren werden nun die folgenden Schritte ausgeführt:

Auslesen der zu dem ersten Berechtigungscode gehörenden Lizenzparameter aus der Sicherungsdatei, die auf dem Computer gespeichert ist. Senden der ausgelesenen Lizenzparameter an den ersten Lizenzgeber-Computer, der den ersten Berechtigungscode erzeugt hat. Dazu wird bevorzugt eine Datenfernverbindung zwischen dem Lizenznehmer-Computer und dem Lizenzgeber-Computer aufgebaut. Im Weiteren wird dann der erste Berechtigungscode in dem ersten Lizenzgeber-Computer auf Grundlage der empfangenen Lizenzparameter wiederhergestellt. Der wiederhergestellte Berechtigungscode wird an den Lizenznehmer-Computer zurückgesandt und an das angeschlossene Datenverarbeitungsgerät weitergeleitet. Da der Lizenznehmer-Computer den Berechtigungscode nicht verarbeiten kann, wird er nur durchgeleitet, ohne ihn abzuspeichern. Gespeichert wird der wiederhergestellte Berechtigungscode dann in dem angeschlossenen Datenverarbeitungsgerät, das mit der Schnittstelle des Lizenznehmer-Computers verbunden ist.

Der Berechtigungscode ist ein Zugangscode oder eine Zugangsberechtigung, um ein Programm auszuführen oder auf digitale Daten zugreifen zu können. Zu den digitalen Daten zählen beispielsweise Filme, Musikdateien oder andere geschützte Dokumente. Der Berechtigungscode stellt somit ein "digitales Recht" dar, um vom Urheber lizenzierte Dateien im Rahmen einer vorhandenen Lizenz nutzen zu können. Der Berechtigungscode umfasst daneben auch alle Lizenzparameter, die zur Wiederherstellung des Berechtigungscodes notwendig sind. Nur mit dem jeweiligen Berechtigungscode, der auf einem Datenverarbeitungsgerät gesichert ist, ist es möglich, die Lizenzparameter in einer Sicherungsdatei auf dem Computer zu speichern.

Um den auf dem Gerät hinterlegten Berechtigungscode wiederherzustellen, ist eine Sicherungsdatei notwendig, die auf dem Computer gespeichert ist. Es gibt also eine klare Trennung zwischen dem Speicherort der Sicherungsdatei und dem Ort, an dem der Berechtigungscode gespeichert ist. Im Falle des Verlusts oder der Zerstörung des Datenverarbeitungsgeräts bleibt die Sicherungsdatei auf dem Rechner erhalten. Die Sicherungsdatei umfasst neben den Lizenzparametern weitere Informationen, die es erlauben, den Lizenzgeber-Computer zu kontaktieren. Die Lizenzparameter enthalten alle zur Wiederherstellung des Berechtigungscodes notwendigen Daten. Darüber hinaus können auch zusätzliche Informationen über den Lizenznehmer in der Sicherungsdatei hinterlegt sein. Da die Sicherungsdatei die Berechtigungscodes selbst nicht enthält, ist kein besonderer Schutz der Sicherungsdatei notwendig. Sie kann kopiert oder vervielfältigt werden.

Die Erzeugung oder Aktualisierung der Sicherungsdatei kann durch eine lizenzierte Anwendung angestoßen, manuell ausgeführt oder automatisch periodisch ausgeführt werden. Standardmäßig wird sie alle 24 Stunden automatisch erstellt. Damit ist stets eine sehr aktuelle Sicherungsdatei vorhanden. Dies ist insbesondere bei der Wiederherstellung von Berechtigungscodes von zeitabhängigen oder nutzungsabhängigen Lizenzen wichtig. Spätestens dann, wenn vom Lizenzgeber-Computer neue Lizenzen bzw. Berechtigungscodes angefordert oder Lizenzparameter aktualisiert werden, wird eine vorhandene Sicherungsdatei aktualisiert.

Bei Verlust oder Beschädigung eines Datenverarbeitungsgeräts wird ein neues Datenverarbeitungsgerät vom Lizenznehmer beschafft und an die Schnittstelle des Lizenznehmer-Computers angeschlossen. Das neue Datenverarbeitungsgerät ist allerdings "leer" und enthält keinerlei Lizenzdaten. Der ursprüngliche Berechtigungscode muss also auf diesem neuen Gerät abgespeichert werden. Zur Wiederherstellung des verlorenen Berechtigungscodes werden dem Lizenzgeber-Computer die zur Wiederherstellung des Berechtigungscodes notwendigen Lizenzparameter übermittelt. Der Lizenzgeber-Computer wertet die empfangenen Lizenzparameter aus. Auf der Grundlage der "alten" Lizenzparameter wird der Berechtigungscode von dem Lizenzgeber-Computer wiederhergestellt bzw. es wird ein "neuer" Berechtigungscode erzeugt. Der neue bzw. restaurierte Berechtigungscode entspricht dann dem auf dem ursprünglichen Gerät gesicherten Berechtigungscode. Der Lizenzgeber bleibt der einzig Berechtigte, um den Berechtigungscode zu erzeugen. Er hat somit die Kontrolle über alle ausgegebenen und erzeugten Berechtigungscodes für die von ihm vergebenen Lizenzen; es bleibt also seine Entscheidung, ob er den Berechtigungscode wiederherstellt oder nicht.

Der wiederhergestellte Berechtigungscode wird dem Lizenznehmer-Computer beispielsweise über das Internet zugesandt. Dabei kann eine verschlüsselte Übermittlung des Codes erfolgen. Eine Übermittlung auf anderen Wegen, zum Beispiel durch Speichern auf einer Diskette oder CD und Versenden der Diskette bzw. CD, ist ebenfalls denkbar.

Der empfangene Berechtigungscode lässt sich jedoch nicht im Lizenznehmer-Computer selbst, sondern nur in dem angeschlossenen Datenverarbeitungsgerät speichern. Der Computer stellt also nur eine Verbindung, zum Beispiel eine Internetverbindung, her und leitet den Berechtigungscode an das Datenverarbeitungsgerät weiter. Ist kein neues Datenverarbeitungsgerät an der Schnittstelle des Computers angeschlossen, so kann das gesamte Verfahren zur Wiederherstellung des Berechtigungscodes nicht durchgeführt werden und die Internetverbindung zwischen dem Lizenznehmer-Computer und dem Lizenzgeber-Computer wird unterbrochen.

Das Verfahren eignet sich auch, um einen Berechtigungscode von einem ersten Gerät auf ein zweites Gerät zu übertragen. Dazu wird dann zusätzlich ein Löschbefehl an das erste Gerät gesendet, um den zu übertragenden Berechtigungscode vom Gerät zu löschen. Anderenfalls würde eine Vervielfältigung des Berechtigungscodes stattfinden. Dies ist jedoch vom Lizenzgeber nicht gewünscht.

Es hat sich in der Praxis als besonders vorteilhaft erwiesen, dass auf dem Datenverarbeitungsgerät mehrere Berechtigungscodes für Lizenzen mehrerer Lizenzgeber gespeichert sind. Je mehr Berechtigungscodes auf dem Datenverarbeitungsgerät gespeichert sind, desto höher ist der Wert, den das Datenverarbeitungsgerät repräsentiert. Damit ist die Wiederherstellung von verlorengegangenen oder beschädigten Berechtigungscodes besonders wichtig. Je größer die Anzahl der Berechtigungscodes und je größer die Anzahl der unterschiedlichen Lizenzgeber, desto aufwendiger ist die Herstellung der Berechtigungscodes im Falle eines Verlusts oder der Zerstörung des Datenverarbeitungsgeräts. In der Sicherungsdatei sind in diesem Fall für jede Lizenz und für jeden Lizenzgeber ein eigener Satz von Lizenzparametern gespeichert.

Bevorzugt wird eine Verbindung zu allen Lizenzgeber-Computern hergestellt, um die entsprechenden Berechtigungscodes wiederherstellen zu lassen. Die Lizenzgeber-Computer sind in der Sicherungsdatei hinterlegt. Jeder Lizenzgeber-Computer bekommt nur den Datensatz von Lizenzparametern übermittelt, die zur Herstellung des Berechtigungscodes der von ihm vergebenen Lizenz notwendig ist. Er erhält keinerlei Information über weitere Lizenzen, andere Berechtigungscodes oder andere Lizenzgeber. Somit bleiben Informationen über andere, vom gleichen Lizenznehmer benutzte Programme, Daten, Musikstücke oder Filme in der Privatsphäre des Lizenznehmers. Da der einzelne Lizenzgeber-Computer nur seine Lizenzparameter aus der Sicherungsdatei übermittelt bekommt, kann auch nur er seine Lizenzen wiederherstellen. Dies stellt einen zusätzlichen Sicherheitsaspekt bei der Wiederherstellung von Berechtigungscodes dar.

Zur Wiederherstellung aller Berechtigungscodes werden die einzelnen Lizenzgeber-Computer, die in der Sicherungsdatei hinterlegt sind, einzeln und nacheinander kontaktiert, um die Berechtigungscodes für die vergebenen Lizenzen anzufordern. Das erfindungsgemäße Verfahren wird mehrfach ausgeführt. Der Lizenznehmer muss weder die Daten noch die Adressen der einzelnen Lizenzgeber bzw. Lizenzgeber-Computer zur Verfügung haben. Er muss nicht einmal genau wissen, ob und welche Art von Lizenzen er besitzt. Auch muss der Lizenznehmer kein Wissen darüber haben, wann und wo er diese Lizenzen erworben hat.

Bevorzugt wird nach der Erfindung der Berechtigungscode in einem gerätespezifischen Format im Datenverarbeitungsgerät abgelegt. Damit lässt sich der Code lediglich auf dem Gerät speichern, nicht aber auf dem angeschlossenen Computer, der die Verbindung zum Lizenzgeber-Computer herstellt. Für den Lizenznehmer-Computer ist das gerätespezifische Format, in dem der Berechtigungscode vorliegt, nicht lesbar. Er kann deshalb auch weder kopiert werden, noch kann er von einem Anwender oder Lizenznehmer manipuliert und verändert werden. Damit ist die Speicherung des Berechtigungscodes sehr sicher gegen den unberechtigten Zugriff.

Vorteilhafterweise liegen die Lizenzparameter in der Sicherungsdatei wenigstens teilweise in verschlüsselter Form vor und sind mit Datum und Uhrzeit beim Erstellen signiert. Sensible Lizenzparameter können durch eine Verschlüsselung gegen einen Zugriff von Dritten geschützt werden. Insbesondere geheime Daten, wie es zum Beispiel die persönlichen Daten des Lizenznehmers sein können, oder Daten, die die Berechtigung zum Empfang oder zum Besitz eines Berechtigungscodes enthalten, sind verschlüsselt. Es kann aber auch die gesamte Sicherungsdatei verschlüsselt sein. Durch die elektronische Signatur wird sichergestellt, dass die Lizenzparameter nicht verändert werden können. Im Fall einer Manipulation der Lizenzparameter oder der Sicherungsdatei passen die Signatur und die Daten nicht mehr zusammen. Damit ist ein Missbrauch der Sicherungsdatei zuverlässig ausgeschlossen, ebenso eine Manipulation der Lizenzparameter. Dies ist insbesondere deshalb wichtig, weil die Sicherungsdatei kopierbar ist.

Zusätzlich können die zu einem Berechtigungscode gehörenden Lizenzparameter von dem Lizenzgeber-Computer verschlüsselt und signiert zum Lizenznehmer-Computer übertragen werden. Dann können die Lizenzparameter auch während des Austauschs zwischen dem Lizenznehmer-Computer und dem Lizenzgeber-Computer nicht von unberechtigten Dritten manipuliert werden.

Darüber hinaus ist die Sicherungsdatei mit einem Zeitsignal signiert. Das Signieren erfolgt mit der letzten zertifizierten Zeit des Datenverarbeitungsgeräts. Das Datenverarbeitungsgerät erhält bei der Produktion eine zertifizierte Zeit. Immer wenn das Datenverarbeitungsgerät an der Schnittstelle eines Computers angeschlossen ist, wird diese Zeit weitergezählt. Sie entspricht damit weder der aktuellen Zeit noch der Systemzeit des Computers. Vorteilhaft ist jedoch, dass diese zertifizierte Zeit nicht manipulierbar ist. Weiterhin kann diese Zeit mit Zeitzertifikaten, die von Zeitservern über das Internet geliefert werden, aktualisiert werden.

Besonders bevorzugt wird eine Weiterbildung des Verfahrens, bei dem die folgenden weiteren Schritte ausgeführt werden: Empfangen der Lizenzparameter am Lizenzgeber-Computer und anschließendes Auswerten der Lizenzparameter. Auf Grundlage der ausgewerteten Parameter wird im nächsten Schritt entschieden, ob der angeforderte Berechtigungscode wiederhergestellt und an den Lizenznehmer zurückgesendet werden soll.

Der Lizenzgeber entscheidet also frei und nach seiner eigenen Geschäftspolitik, ob ein Berechtigungscode wiederhergestellt werden soll. Insbesondere bei wiederholten Verlusten bzw. bei der wiederholten Anforderung zur Wiederherstellung des Berechtigungscodes kann der Lizenzgeber die Wiederherstellung verweigern. Werden von einem Lizenznehmer der Verlust eines oder mehrerer Geräte in zeitlich nah beieinander liegenden Zeiträumen gemeldet, kann der Lizenzgeber die Wiederherstellung verzögern, von weiterer Prüfung abhängig machen oder ganz ablehnen.

Der Lizenzgeber kann auch abhängig von der an den Lizenznehmer-Computer übertragenen Lizenz entscheiden, in welcher Art die Wiederherstellung geschehen soll. Dies ist insbesondere dann wichtig, wenn die Lizenz eine zeitlich begrenzte Lizenz, eine nutzungsabhängige Lizenz, so genannte Pay-per-Use-Lizenz, oder eine sonstige spezielle Lizenz ist. Der Lizenzgeber allein entscheidet, ob der Berechtigungscode identisch wiederhergestellt wird oder in veränderter Form. Bei so genannten Pay-per-Use-Lizenzmodellen, bei denen die digitalen Rechte so genannte Nutzungseinheiten enthalten, ähnlich einer Geldkarte, kann der Lizenzgeber den prozentualen Anteil dessen, was an Wert wiederhergestellt wird, abhängig davon machen, wie alt die Sicherungsdatei des Lizenznehmer-Computer ist.

Bevorzugt enthält die Sicherungsdatei, die beim Besitzer des Geräts angelegt worden ist, eine zertifizierte Zeitinformation. Die Sicherungsdatei ist dann mit einer Zeitinformation digital signiert, um Manipulationen des Zeitpunkts des Erzeugens der Sicherungsdatei auszuschließen.

Vorteilhaft können noch die weiteren Schritte durchgeführt werden: Senden einer in der Sicherungsdatei gespeicherten Zeitinformation an den Lizenzgeber-Computer, Auswerten der Zeitinformation durch den Lizenzgeber-Computer und Erzeugen eines mit der Zeitinformation korrespondierenden Berechtigungscodes.

Die in der Sicherungsdatei enthaltene Zeitinformation kann den Zeitpunkt der Erzeugung der Sicherungsdatei angeben. Zu dem Zeitpunkt, an dem die Sicherungsdatei erzeugt wurde, war das als verloren oder defekt gemeldete Gerät mit dem enthaltenen Berechtigungscode noch funktionsfähig und an den Computer angeschlossen. Bei zeitabhängigen Lizenzen kann nun abhängig von der Zeitinformation der Berechtigungscode wiederhergestellt werden. Dabei kann abweichend von der ursprünglich zur Verfügung gestellten Lizenz ein angepasster Berechtigungscode erzeugt und an den Lizenznehmer-Computer gesendet werden. Ist das Zeitlimit der zeitlich begrenzten Lizenz inzwischen abgelaufen, wird die Wiederherstellung des Berechtigungscodes verweigert. Bei nutzungsabhängigen Lizenzen kann in Abhängigkeit von der enthaltenen Zeitinformation lediglich ein prozentualer Anteil des Nutzungskontingents dem Lizenznehmer bei dem wiederhergestellten Berechtigungscode zur Verfügung gestellt werden.

Eine zertifizierte Zeitinformation wird dem Datenverarbeitungsgerät vom Lizenzgeber verschlüsselt übermittelt. Dies kann geschehen, wenn der Lizenznehmer-Computer eine Verbindung zum Lizenzgeber-Computer herstellt. Die zertifizierte Zeitinformation kann aber auch von einem besonderen Zeitserver angefordert werden, sobald der Lizenznehmer-Computer, an den das Datenverarbeitungsgerät angeschlossen ist, eine Verbindung zum Internet aufbaut.

Besonders bevorzugt werden bei dem erfindungsgemäßen Verfahren folgende weitere Schritte durchgeführt: Herstellen einer Datenfernverbindung zwischen dem Lizenznehmer-Computer und einem zentralen Verwaltungsrechner, Senden der Sicherungsdatei an den Verwaltungsrechner und Herstellen einer Datenverbindung zwischen dem Lizenzgeber-Computer und dem zentralen Verwaltungsserver.

Die gesamte Sicherungsdatei wird während des Prozesses des Wiederherstellens eines oder mehrerer Berechtigungscodes an den zentralen Verwaltungsrechner gesendet. Der Verwaltungsserver liest dann die Lizenzparameter und die Lizenzgeber aus der Sicherungsdatei aus und stellt die Verbindung zwischen dem Lizenzgeber-Computer bzw. den Lizenzgeber-Computern und dem Verwaltungsserver her. Der Verwaltungsserver organisiert die gesamte Wiederherstellung des bzw. der Berechtigungscodes. Insbesondere wenn viele Berechtigungscodes von unterschiedlichen Lizenzgebern auf dem verloren gegangenen Datenverarbeitungsgerät vorhanden waren, ermöglicht der Einsatz des Verwaltungsservers ein schnelles und komfortables Wiederherstellen aller Berechtigungscodes. Der Verwaltungsserver kann optional nacheinander die einzelnen Lizenzgeber-Computer kontaktieren und die Wiederherstellung der zu den Lizenzen gehörenden Berechtigungscodes anfordern. Nach dem Empfang der Berechtigungscodes von den Lizenzgeber-Computern kann er die Berechtigungscodes an den Lizenznehmer-Computer weiterleiten.

Bevorzugt wird in einem weiteren Schritt eine Datenfernverbindung zu dem Lizenznehmer-Computer und dem Lizenzgeber-Computer hergestellt. Sind Berechtigungscodes mehrerer Lizenzgeber-Computer auf dem Datenverarbeitungsgerät gespeichert, werden alle in der Sicherungsdatei hinterlegten Lizenzgeber-Computer kontaktiert und zu ihnen eine Verbindung aufgebaut. Das Rücksenden der wiederhergestellten Berechtigungscodes kann dann direkt vom Lizenzgeber-Computer an den Lizenznehmer-Computer stattfinden. Der Verwaltungsserver muss nicht mehr dazwischen geschaltet sein. Auf diese Weise wird zum einen der Verwaltungsserver von administrativen Aufgaben entlastet, zum anderen kann der Wiederherstellungsprozess deutlich beschleunigt werden.

Besonders bevorzugt wird ferner ein fortentwickeltes Verfahren, bei dem die Sicherungsdatei eine unveränderbare Seriennummer des Datenverarbeitungsgeräts enthält. Wird eine Sicherungsdatei geschrieben, wird gleichzeitig die interne Seriennummer des Datenverarbeitungsgeräts in der Sicherungsdatei abgelegt. Die Seriennummer ist dabei bevorzugt in einem nicht manipulierbaren Format hinterlegt.

Vorzugsweise werden zusätzlich die folgenden weiteren Schritte ausgeführt: Die Seriennummer wird aus der Sicherungsdatei ausgelesen und an einen Verwaltungsserver gesendet. Die vom Verwaltungsserver empfangene Seriennummer wird dann in einer Sperrliste beim Verwaltungsserver abgelegt. Mit jeder Ausführung der Wiederherstellung von einem Berechtigungscode wird die Seriennummer des ursprünglichen Datenverarbeitungsgeräts, auf dem die Berechtigungscodes gespeichert waren, an den Verwaltungsserver übertragen. Das ursprüngliche Datenverarbeitungsgerät wird somit als defekt, verloren bzw. gestohlen gemeldet und in die Sperrliste eingetragen. Auf diese Weise entsteht eine Liste mit allen Datenverarbeitungsgeräten, deren Berechtigungscodes wiederhergestellt wurden. Somit kann eine unberechtigte Weiterbenutzung eines verloren gegangenen oder defekten Geräts vermieden werden. Ein Missbrauch des Wiederherstellungsverfahrens als Duplizierverfahren von Berechtigungscodes ist damit ausgeschlossen.

Wird von dem Computer des Lizenznehmers, an welchem ein Datenverarbeitungsgerät mit Berechtigungscodes angeschlossen ist, eine Internet-Verbindung hergestellt, so kann an den Verwaltungsserver ein Signal gesendet werden. Auch wenn ein zertifiziertes Zeitsignal vom Verwaltungsserver oder einem Zeitserver abgerufen werden soll, beispielsweise um die Zeitinformation in der Sicherungsdatei zu aktualisieren, wird die Internet-Verbindung zu dem Computer des Lizenznehmers erkannt. Das Datenverarbeitungsgerät sendet dann seine Seriennummer über den Lizenznehmer-Computer an den Verwaltungsserver. Der Verwaltungsserver überprüft die erhaltene Seriennummer mit der von ihm geführten Sperrliste der defekten bzw. verloren gegangenen Geräte. Ist die erhaltene Seriennummer des Datenverarbeitungsgeräts in dieser Nummernliste bereits abgespeichert, so wird ein Sperrvermerk in Form eines Merkers auf dem Datenverarbeitungsgerät gespeichert, der das Gerät und den Abruf der darauf gesicherten Berechtigungscodes sperrt. Das Datenverarbeitungsgerät kann dann nicht mehr benutzt werden. Auf diese Weise wird ein Missbrauch des Wiederherstellungsverfahrens vermieden. Ein Duplizieren der Berechtigungscodes mit Hilfe des Wiederherstellungsverfahrens ist somit unterbunden.

Alternativ kann auch der Lizenzgeber-Computer die Seriennummer eines als verloren oder gestohlen gemeldeten Datenverarbeitungsgeräts in einer Nummernliste speichern. Der Lizenzgeber-Computer sendet zusätzlich die Seriennummer des als gestohlen oder defekt gemeldeten Geräts an einen Verwaltungsserver, der eine Liste mit allen gestohlen gemeldeten Geräten führt. Der Verwaltungsserver prüft, ob die übermittelte Seriennummer von einem autorisierten Lizenzgeber-Computer stammt. Ist dies der Fall, wird die Seriennummer in der Liste aufgenommen. Die beim Verwaltungsserver geführte Datenbank mit den gesperrten Seriennummern kann von allen autorisierten Lizenzgebern und von zertifizierten Zeitservern abgefragt werden.

Erhält ein Lizenzgeber-Computer eine Anforderung zur Wiederherstellung eines Berechtigungscodes, so überprüft er zuerst die übermittelte Seriennummer. Dazu fragt er die Datenbank der gesperrten Seriennummern des Verwaltungsservers ab. Ist die Seriennummer nicht in der Datenbank enthalten, wird der Wiederherstellungsprozess des Berechtigungscodes fortgeführt.

Ist die übermittelte Seriennummer als gesperrt in der Liste enthalten, so wird ein Sperrsignal an das entsprechende Datenverarbeitungsgerät gesendet. Das Datenverarbeitungsgerät ist daraufhin gesperrt und kann nicht weiter benutzt werden; die auf ihm gespeicherten Berechtigungscodes können nicht mehr ausgeführt werden. Jede Art der Entschlüsselung oder Authentifizierung wird damit verhindert.

Eine besondere Ausführungsform der Erfindung wird anhand der nachstehenden Abbildungen näher erläutert. Es zeigen:
- Figur 1: die Sicherungsstruktur auf Seite des Lizenznehmers für zwei Datenverarbeitungsgeräte;
- Figur 2: den Prozessablauf zum Anfordern und Abspeichern von wiederhergestellten Berechtigungscodes auf einem neuen Datenverarbeitungsgerät.

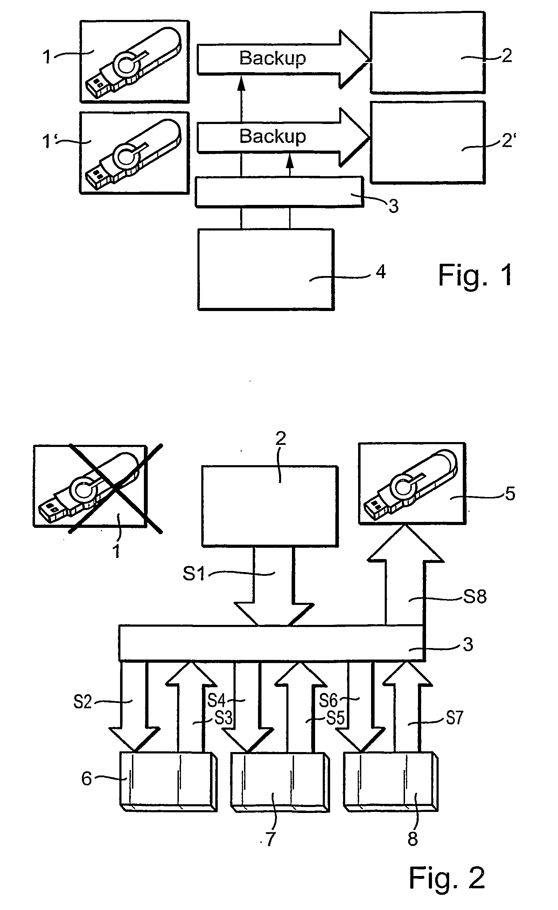

Für zwei Datenverarbeitungsgeräte 1, 1' in Figur 1 werden je eine Sicherungsdatei 2, 2' angelegt. Dazu wird von einem Anwendungsprogramm, einem so genannten Back-up-Manager 3, das Erzeugen einer Sicherungsdatei eingeleitet. Der Back-up-Manager 3 erzeugt die Sicherungsdateien 2, 2' in Abhängigkeit von Parametern in einer Sicherungskontrolldatei 4.

Figur 2 zeigt den Prozess zur Speicherung der wiederhergestellten Berechtigungscodes in einem neuen Datenverarbeitungsgerät 5. Ist das Datenverarbeitungsgerät 1 verloren gegangen oder defekt, wird von dem Back-up-Manager 3 die Sicherungsdatei 2 ausgelesen. Alle darin enthaltenen Lizenzparameter werden von dem Back-up-Manager 3 in einem ersten Schritt S 1 ausgewertet.

Im zweiten Schritt S 2 werden die zu einem ersten Lizenzgeber-Computer 6 gehörenden Lizenzparameter an den Lizenzgeber-Computer 6 übermittelt. Der Lizenzgeber-Computer 6 erzeugt auf Grundlage der empfangenen Lizenzparameter einen Berechtigungscode, der dem im Datenverarbeitungsgerät 1 gespeicherten Berechtigungscode entspricht. Der wiederhergestellte Berechtigungscode wird dann in einem dritten Schritt S 3 an den Back-up-Manager 3 übermittelt.

Im vierten Schritt S 4 wird eine Datenfernverbindung zu einem Lizenzgeber-Computer 7 hergestellt und die entsprechenden Lizenzparameter an ihn übermittelt. Der Lizenzgeber-Computer 7 stellt die den empfangenen Lizenzparametern entsprechenden Berechtigungscodes wieder her und sendet sie im Schritt S 5 an den Back-up-Manager 3 zurück. In den anschließenden Schritten S 6 und S 7 wird dieses Verfahren für den Lizenzgeber-Computer 8 wiederholt.

Der Back-up-Manager 3 leitet die von den Lizenzgeber-Computern 6, 7, 8 empfangenen Berechtigungscodes in einem weiteren Schritt S 8 an das neue Datenverarbeitungsgerät 5 weiter und speichert sie dort ab. Das Datenverarbeitungsgerät 5 enthält nun alle Berechtigungscodes, die im defekten Datenverarbeitungsgerät 1 gespeichert waren. Dabei wurde von allen Lizenzgeber-Computern 6, 7 und 8 das Wiederherstellen der Berechtigungscodes angefordert, die in der Sicherungsdatei 2 gespeichert waren.

### Zusammenstellung der Bezugszeichen

- 1, 1': Datenverarbeitungsgerät
- 2, 2': Sicherungsdatei
- 3: Back-up-Manager
- 4: Sicherungskontrolldatei
- 5: Datenverarbeitungsgerät
- 6, 7, 8: Lizenzgeber-Computer

## Patentansprüche

1. Verfahren zum Wiederherstellen eines Berechtigungscodes, der in einem zugriffsgeschützten Datenverarbeitungsgerät (1,1') gespeichert ist, das über eine Schnittstelle an einen Lizenznehmer-Computer angeschlossen ist,
der Berechtigungscode von einem Lizenzgeber-Computer an den Lizenznehmer-Computer übermittelt wurde,
auf dem zugriffsgeschützten Datenverarbeitungsgerät (1, 1') wenigstens ein erster Berechtigungscode, der auf einem ersten Lizenzgeber-Computer erzeugt wurde abgespeichert ist **dadurch gekennzeichnet, dass** ein zweiter Berechtigungscode, der auf einem zweiten Lizenzgeber-Computer erzeugt wurde, abgespeichert ist,
auf dem Lizenznehmer-Computer eine zu den abgespeicherten Berechtigungscodes gehörende Sicherungsdatei (2,2') gespeichert ist, welche die zu den Berechtigungscodes gehörenden Lizenzparameter enthält,
und,
die folgenden Schritte ausgeführt werden:
- Auslesen der zu dem ersten Berechtigungscode gehörenden Lizenzparameter aus der Sicherungsdatei (2,2');
- Senden der ausgelesenen Lizenzparameter an den ersten Lizenzgeber-Computer, der den ersten Berechtigungscode erzeugt hat;
- Wiederherstellen des den empfangenen Lizenzparametern entsprechenden ersten Berechtigungscodes in dem ersten Lizenzgeber-Computer;
- Rücksenden des wiederhergestellten Berechtigungscodes in einem von Lizenznehmer Computer nicht lesbaren Format an den Lizenznhmer-Computer und Weiterleiten des Berechtigungscodes an das angeschlossene zugriffsgeschützten Datenverarbeitungsgerät (1,1');
- Speichern des wiederhergestellten Berechtigungscodes in dem angeschlossenen zugriffsgeschützten Datenverarbeitungsgerät (5).

2. Verfahren nach Anspruch 1, **gekennzeichnet durch** die zusätzlichen folgenden Schritte:
- Auslesen der zu dem zweiten Berechtigungscode gehörenden Lizenzparameter aus der Sicherungsdatei (2,2');
- Senden der ausgelesenen Lizenzparameter an den zweiten Lizenzgeber-Computer;
- Wiederherstellen des den empfangenden Lizenzparametern entsprechenden zweiten Berechtigungscodes in dem zweiten Lizenzgeber-Computer;
- Rücksenden des wiederhergestellten Berechtigungscodes an den Lizenznehmer-Computer und Weiterleiten an das Datenverarbeitungsgerät;
- Speichern des wiederhergestellten Berechtigungscodes in dem angeschlossenen Daten verarbeitungsgerät (5).

3. Verfahren nach Anspruch 1 oder 2, **dadurch gekennzeichnet, dass** das Datenverarbeitungsgerät (5) an den Lizenznehmer-Computer angeschlossen sein muss, um in dem Linzenzgeber-Computer aus den empfangenen Lizenzparametern den Berechtigungscode wiederherstellen zu können.

4. Verfahren nach einem der vorherigen Ansprüche, **dadurch gekennzeichnet, dass** in der Sicherungsdatei (2, 2') ausschließlich Lizenzparameter enthalten sind.

5. Verfahren nach einem der vorherigen Ansprüche, **dadurch gekennzeichnet, dass** der Speicherort der Sicherungsdatei (2, 2') von dem Speicherort der Berechtigungscodes verschieden ist.

6. Verfahren nach einem der vorherigen Ansprüche, **dadurch gekennzeichnet, dass** der Berechtigungscode in einem gerätespezifischen Format im Datenverarbeitungsgerät abgelegt wird.

7. Verfahren nach einem der vorherigen Ansprüche, **dadurch gekennzeichnet, dass** die Lizenzparameter mit einer Zeitinformation beim Sichern signiert werden und wenigstens teilweise in verschlüsselter Form in der Sicherungsdatei (2, 2') vorliegen.

8. Verfahren nach einem der vorherigen Ansprüche, **gekennzeichnet durch** die folgenden weiteren Schritte:
- Empfangen der Lizenzparameter beim Lizenzgeber-Computer (6, 7, 8);
- Auswerten der Lizenzparameter;
- Entscheiden, ob der angeforderte Berechtigungscode wiederhergestellt und an den Lizenznehmer-Computer zurückgesendet werden soll.

9. Verfahren nach einem der vorherigen Ansprüche, **gekennzeichnet durch** die folgenden weiteren Schritte:
- Senden einer in der Sicherungsdatei (2, 2') gespeicherten Zeitinformation an den Lizenzgeber-Computer (6, 7, 8);
- Auswerten der Zeitinformation **durch** den Lizenzgeber-Computer (6, 7, 8);
- Erzeugen eines mit der Zeitinformation korrespondierenden Berechtigungscodes.

10. Verfahren nach einem der vorherigen Ansprüche, **dadurch gekennzeichnet, dass** zu allen Lizenzgeber-Computern (6, 7, 8) Datenfemverbindungen hergestellt werden, um die entsprechenden Berechtigungscodes wiederherstellen zu lassen.

11. Verfahren nach einem der vorherigen Ansprüche, **gekennzeichnet durch** die folgenden weiteren Schritte:
- Herstellen einer Datenfernverbindung zwischen dem Lizenznehmer-Computer und einem zentralen Verwaltungsrechner;
- Senden der Sicherungsdatei (2, 2') an den Verwaltungsserver;
- Herstellen einer Datenverbindung zwischen dem Lizenzgeber-Computer (6, 7, 8) und dem zentralen Verwaltungsserver.

12. Verfahren nach einem der vorherigen Anspruch, **dadurch gekennzeichnet, dass**
die Sicherungsdatei (2, 2') eine unveränderbare Seriennummer des Datenverarbeitungsgeräts (1, 1', 5) enthält, und die folgenden weiteren Schritte ausgeführt werden:
- Auslesen der Seriennummer aus der Sicherungsdatei (2, 2');
- Senden der Seriennummer an einen Verwaltungsserver;
- Ablegen der Seriennummer in einer Sperrliste beim Verwaltungsserver.

13. Verfahren nach einem der vorherigen Ansprüche, **dadurch gekennzeichnet, dass** die Lizenzparameter in der Sicherungsdatei (2, 2') in unverschlüsselter Form vorliegen und/oder die Sicherungsdatei (2, 2') weitere Informationen über den Lizenznehmer-Computer enthält.

## Claims

1. Method of restoration of an authorisation code stored in an access-protected data processing device (1, 1') which is connected to a licensee computer via an interface, wherein the authorisation code has been transmitted by a licensor computer to the licensee computer and at least one first authorisation code which has been generated on a first licensor computer is stored on the access-protected data processing device (1, 1'), **characterised in that** a second authorisation code which has been generated on a second licensor computer is stored, a security file (2, 2') belonging to the stored authorisation code and containing the licence parameters is stored on the licensee computer, and the following steps are carried out:
- reading of the licence parameters belonging to the first authorisation code from the security file (2, 2');
- transmission of the read licence parameters to the first licensor computer;
- restoration of the authorisation code corresponding to the received licence parameters in the first licensor computer;
- return of the restored authorisation code to the licensee computer in a format which cannot be read by the licensee computer and passing on the authorisation code to the connected access-protected data processing device (1, 1');
- storage of the restored authorisation code in the connected access-protected data processing device (5).

2. Method as claimed in Claim 1, **characterised by** the additional following steps:
- reading of the licence parameters belonging to the second authorisation code from the security file (2, 2');
- transmission of the read licence parameters to the second licensor computer;
- restoration of the second authorisation code corresponding to the received licence parameters in the second licensor computer;
- return of the restored authorisation code to the licensee computer and onward transmission thereof to the data processing device;
- storage of the restored authorisation code in the connected data processing device (5).

3. Method as claimed in either Claim 1 or Claim 2, **characterised in that** the data processing unit (5) must be connected to the licensee computer in order to be able to restore the authorisation code in the licensor computer from the received licence parameters.

4. Method as claimed in any one of the preceding claims, **characterised in that** exclusively licence parameters are contained in the security file (2, 2').

5. Method as claimed in any one of the preceding claims, **characterised in that** the storage location of the security file (2, 2') is different from the storage location of the authorisation code.

6. Method as claimed in any one of the preceding claims, **characterised in that** the authorisation code is stored in a device-specific format in the data processing device.

7. Method as claimed in any one of the preceding claims, **characterised in that** the licence parameters are signed with time information when being secured and are provided at least partially in encrypted form in the security file (2, 2').

8. Method as claimed in any one of the preceding claims, **characterised by** the following further steps:
- reception of the licence parameters at the licensor computer (6, 7, 8);
- evaluation of the licence parameters;
- decision as to whether the requested authorisation code should be restored and returned to the licensee computer.

9. Method as claimed in any one of the preceding claims, **characterised by** the following further steps:
- transmission of time information stored in the security file (2, 2') to the licensor computer (6, 7, 8);
- evaluation of the time information by the licensor computer (6, 7, 8);
- generation of an authorisation code corresponding to the time information.

10. Method as claimed in any one of the preceding claims, **characterised in that** remote data connections to all licensor computers (6, 7, 8) are produced in order to enable restoration of the corresponding authorisation codes.

11. Method as claimed in any one of the preceding claims, **characterised by** the following further steps:
- production of a remote data connection between the licensee computer and a central management computer;
- transmission of the security file (2, 2') to the management server;
- production of a data connection between the licensor computer (6, 7, 8) and the central management computer.

12. Method as claimed in any one of the preceding claims, **characterised in that** the security file (2, 2') contains an unmodifiable serial number of the data processing device (1, 1', 5) and the following further steps are carried out:
- reading of the serial number from the security file (2, 2');
- transmission of the serial number to a management server;
- storage of the serial number in a block list at the management server.

13. Method as claimed in any one of the preceding claims, **characterised in that** the licence parameters are present in unencrypted form in the security file (2, 2') and/or the security file (2, 2') contains further data concerning the licensee computer.

## Revendications

1. Procédé pour reconstituer un code d'autorisation qui est enregistré dans un appareil de traitement de données (1, 1') à accès protégé, lequel est connecté via une interface à un ordinateur bénéficiaire de licence,
le code d'autorisation ayant été transmis par un ordinateur cessionnaire de licence à l'ordinateur bénéficiaire de licence, au moins un premier code d'autorisation, qui a été généré sur un premier ordinateur cessionnaire de licence, étant enregistré sur l'appareil de traitement de données (1, 1') à accès protégé, **caractérisé par le fait qu'**un deuxième code d'autorisation, qui a été généré sur un deuxième ordinateur cessionnaire de licence, est enregistré,
qu'un fichier de sauvegarde (2, 2'), associé aux codes d'autorisation mémorisés et contenant les paramètres de licence associés aux codes d'autorisation, est enregistré sur l'ordinateur bénéficiaire de licence, et que les pas suivants sont exécutées :
- lecture, du fichier de sauvegarde (2, 2'), des paramètres de licence associés au premier code d'autorisation;
- envoi des paramètres de licence lus au premier ordinateur cessionnaire de licence qui a généré le premier code d'autorisation;
- reconstitution, dans le premier ordinateur cessionnaire de licence, du premier code d'autorisation correspondant aux paramètres de licence reçus;
- renvoi du code d'autorisation reconstitué, sous un format ne pouvant pas être lu par l'ordinateur bénéficiaire de licence, à l'ordinateur bénéficiaire de licence et transmission du code d'autorisation à l'appareil de traitement de données (1, 1') à accès protégé connecté;
- mise en mémoire du code d'autorisation reconstitué, dans l'appareil de traitement de données (5) à accès protégé connecté.

2. Procédé selon la revendication 1, **caractérisé par le fait qu'**il comporte les pas supplémentaires suivants :
- lecture, depuis le fichier de sauvegarde (2, 2'), des paramètres de licence associés au deuxième code d'autorisation;
- envoi des paramètres de licence extraits au deuxième ordinateur cessionnaire de licence;
- reconstitution, dans le deuxième ordinateur cessionnaire de licence, du deuxième code d'autorisation correspondant aux paramètres de licence reçus;
- renvoi du code d'autorisation reconstitué à l'ordinateur bénéficiaire de licence et transmission à l'appareil de traitement de données;
- mise en mémoire du code d'autorisation reconstitué, dans l'appareil de traitement de données (5) connecté.

3. Procédé selon la revendication 1 ou 2, **caractérisé par le fait que** l'appareil de traitement de données (5) doit être connecté à l'ordinateur bénéficiaire de licence, afin de pouvoir reconstituer le code d'autorisation dans l'ordinateur cessionnaire de licence, à partir des paramètres de licence reçus.

4. Procédé selon une des revendications précédentes, **caractérisé par le fait que** le fichier de sauvegarde (2, 2') contient exclusivement des paramètres de licence.

5. Procédé selon une des revendications précédentes, **caractérisé par le fait que** le lieu d'enregistrement du fichier de sauvegarde (2, 2') est différent du lieu d'enregistrement des codes d'autorisation.

6. Procédé selon une des revendications précédentes, **caractérisé par le fait que** le code d'autorisation est enregistré dans l'appareil de traitement de données sous un format spécifique à l'appareil.

7. Procédé selon une des revendications précédentes, **caractérisé par le fait que** les paramètres de licence sont signés avec une information de temps lors de la sauvegarde et sont présents, au moins en partie, sous une forme codée dans le fichier de sauvegarde (2, 2').

8. Procédé selon une des revendications précédentes, **caractérisé par le fait qu'**il comporte les pas supplémentaires suivants :
- réception des paramètres de licence par l'ordinateur cessionnaire de licence (6, 7, 8);
- interprétation des paramètres de licence;
- décision, si le code d'autorisation demandé doit être restitué et renvoyé à l'ordinateur bénéficiaire de licence.

9. Procédé selon une des revendications précédentes, **caractérisé par le fait qu'**il comporte les pas supplémentaires suivants :
- envoi d'une information de temps, mémorisée dans le fichier de sauvegarde (2, 2'), à l'ordinateur cessionnaire de licence (6, 7, 8);
- interprétation de l'information de temps par l'ordinateur cessionnaire de licence (6, 7, 8);
- génération d'un code d'autorisation correspondant à l'information de temps.

10. Procédé selon une des revendications précédentes, **caractérisé par le fait que** des liaisons de télétransmission de données sont établies avec tous les ordinateurs de donneur de licence (6, 7, 8), en vue de faire reconstituer les codes d'autorisation correspondants.

11. Procédé selon une des revendications précédentes, **caractérisé par le fait qu'**il comporte les pas supplémentaires suivants :
- établissement d'une liaison de télétransmission de données entre l'ordinateur bénéficiaire de licence et un calculateur de gestion central;
- envoi du fichier de sauvegarde (2, 2') au serveur de gestion;
- établissement d'une liaison de données entre l'ordinateur cessionnaire de licence (6, 7, 8) et le serveur de gestion central.

12. Procédé selon une des revendications précédentes, **caractérisé par le fait que** le fichier de sauvegarde (2, 2') contient un numéro de série non modifiable de l'appareil de traitement de données (1, 1', 5) et les pas supplémentaires suivants sont exécutés :
- lecture du numéro de série du fichier de sauvegarde (2, 2');
- envoi du numéro de série à un serveur de gestion;
- mise en mémoire du numéro de série dans une liste de blocage du serveur de gestion.

13. Procédé selon une des revendications précédentes, **caractérisé par le fait que** les paramètres de licence sont présents dans le fichier de sauvegarde (2, 2') sous une forme non codée et/ou le fichier de sauvegarde (2, 2') contient des informations supplémentaires sur l'ordinateur bénéficiaire de licence.
